# FASCICULE DE BREVET EUROPEEN

(11) **EP 0 574 986 B1**
(45) Date de publication et mention de la délivrance du brevet: **31.10.2001**
(21) Numéro de dépôt: 93201645.4
(22) Date de dépôt: 09.06.1993
(51) Int. Cl.: G06F 15/80

(54) **Dispositif de traitement de données ayant une architecture à instruction commune agissant sur des données multiples**
Datenverarbeitungsvorrichtung mit einer Prozessorarchitektur für Einzelbefehle und Mehrfachdaten
Data processing apparatus with a single instruction and multiple data architecture

(30) Priorité: 17.06.1992 FR 9207349
(43) Date de publication de la demande: 22.12.1993
(73) Titulaire: Koninklijke Philips Electronics N.V., 5621 BA Eindhoven (NL)
(72) Inventeur: Duranton, Marc, F-75008 Paris (FR)
(74) Mandataire: Landousy, Christian

(56) Documents cités:
- EP-A- 0 463 721
- EP-AP- 0 314 277
- WO-A-91/18347
- 1988 IEEE INTERNATIONAL SYMPOSIUM ON CIRCUITS AND SYSTEMS, vol. 2, 7 Juin 1988, HELSINKI, FINLAND pages 1499 - 1502 M. O. AHMAD AND D. SUNDARARAJAN 'Parallel implementation of a median filtering algorithm'
- NEURAL NETWORKS FROM MODELS TO APPLICATIONS 1988, PARIS pages 720 - 724 M. DURANTON 'A digital vlsi module for neural networks'

## Description

L'invention concerne un dispositif de traitement de données comprenant une pluralité de processeurs élémentaires opérant en parallèle selon un mode dit à instruction commune agissant sur des données multiples avec une pluralité de bus de données de sortie, des moyens pour traiter collectivement des données multiples de sortie, avec un bus de contrôle d'entrée commun et un bus de données d'entrée commun.

Un dispositif muni d'une telle architecture fait opérer simultanément plusieurs processeurs sur des données différentes à l'aide d'une commande unique et délivre en sortie plusieurs résultats (ce mode est appelé SIMD en langue anglaise). Des architectures hautement parallèles de ce type sont mises en oeuvre notamment dans des réseaux de neurones. Ainsi le document EP 0 322 966 décrit un réseau de neurones dont l'architecture peut être décomposée en plusieurs processeurs élémentaires ayant chacun une partie de la mémoire de coefficients synaptiques Cᵢⱼ, un registre d'état de neurones Vᵢ et des moyens pour calculer des contributions Cᵢⱼ.Vᵢ. Tous ces processeurs élémentaires se partagent un bus d'entrée commun et délivrent en sortie en parallèle une pluralité de contributions Cᵢⱼ.Vᵢ qui sont additionnées dans un arbre d'additionneurs.

Les dispositifs de ce type sont conçus pour que les données suivent un chemin (flux) direct entre l'entrée et la sortie. Ce type d'architecture est prévu pour accroître la vitesse d'exécution de tels dispositifs de traitements de données. Ils sont donc conçus pour gérer avec un maximum de rapidité des flux de données qui suivent des trajets parallèles allant de l'entrée vers la sortie dudit dispositif. Au cours de ces trajets parallèles, les flux de données restent indépendants jusqu'au moment où ils se regroupent pour être collectivement additionnés, comparés ou autres.

Or les réseaux de neurones en particulier mettent en oeuvre des traitements qui deviennent de plus en plus sophistiqués avec des applications de plus en plus diversifiées utilisant des algorithmes de plus en plus complexes. Dans le cadre de ces applications diversifiées, un réseau de neurones ayant une structure matérielle déterminée doit disposer d'un jeu d'instructions étendu qui lui permet de traiter un maximum d'applications donc d'algorithmes dédiés à chacune de ces applications. En particulier des flux de données suivant des trajets exclusivement parallèles ne permettent pas de traiter des interactions entre ces flux au cours de leur traitement jusqu'alors indépendant.

Dans un réseau de neurones, ces flux peuvent tout au plus être regroupés en fin de traitement, mais ils ne peuvent être combinés avant ce regroupement final. Un tel réseau de neurones manque ainsi de souplesse pour s'adapter à des tâches diversifiées.

Le but de l'invention est donc de rompre avec cette indépendance exclusive des trajets parallèles, donc des traitements, en permettant d'introduire des interactions modulables entre flux.

Ce but est atteint avec un dispositif de traitement de données comme décrit à la revendication 1, dans lequel les processeurs élémentaires sont munis de moyens permettant de faire communiquer un processeur élémentaire quelconque avec au moins un processeur élémentaire adjacent à travers au moins un chemin chaîné de données.

Ainsi, avantageusement, en communiquant avec ses deux plus proches voisins il est possible de faire, par exemple, des permutations de données deux à deux, des rotations dans un sens ou dans l'autre de toutes les données sur l'ensemble des processeurs. Ce dernier mécanisme nécessite de connecter le premier processeur élémentaire au dernier processeur élémentaire. On peut aussi extraire les données du dernier processeur élémentaire en ne le connectant pas au premier processeur élémentaire.

Ces interactions entre flux s'effectuent dans le cadre du traitement interne à chaque processeur. Mais les résultats continuent à être délivrés en parallèle par chaque processeur élémentaire sur la pluralité de bus de sortie. L'ensemble de ces résultats forment un résultat de type vectoriel. Il peut être transformé en un résultat de type scalaire dans une unité VSU de transformation vecteur vers scalaire.

Selon un mode particulier, chaque processeur élémentaire comprend des moyens d'entrée et/ou des moyens de sortie, un organe d'identification qui active lesdits moyens lorsqu'un signal d'identification est reçu par ledit processeur, ledit dispositif comprenant en outre une unité de commande scalaire-vecteur (SVCU) qui, en réponse audit signal d'identification, autorise ledit processeur élémentaire soit à recevoir soit à délivrer une donnée scalaire. Plusieurs processeurs élémentaires peuvent être autorisés à recevoir au moins une donnée scalaire commune.

Le dispositif de traitement de données peut être muni d'une unité de transformation scalaire-scalaire SSU qui reçoit un résultat scalaire en provenance de l'unité de transformation vecteur-scalaire VSU. L'unité de transformation scalaire-scalaire SSU peut délivrer ladite donnée scalaire commune.

Chaque processeur élémentaire est muni d'une mémoire locale pour stocker des coefficients synaptiques et/ou des états de neurones. Préférentiellement, la mémoire est organisée en pile de registres qui stocke des coefficients synaptiques et des états de neurones, en stockant soit majoritairement des coefficients synaptiques soit majoritairement des états de neurones. La lecture de la mémoire est préférentiellement à double accès afin d'accéder à la fois aux coefficients synaptiques et aux états de neurones, ce qui accroît la rapidité d'exécution.

Les coefficients synaptiques peuvent être stockés dans la mémoire selon un rangement dit en diagonale. Ainsi grâce aux moyens faisant communiquer un processeur élémentaire avec un processeur adjacent, il est possible de transposer une matrice de coefficients synaptiques Cᵢⱼ en une matrice transposée de coefficients synaptiques Cⱼᵢ. Cette possibilité est utilisée notamment dans la mise en oeuvre de l'algorithme de retropropagation des erreurs au cours de phases d'apprentissage mises en oeuvre dans un réseau de neurones.

Ces différents aspects de l'invention et d'autres encore seront apparents et élucidés à partir des modes de réalisation décrits ci-après.

L'invention sera mieux comprise à l'aide des figures suivantes, données à titre d'exemples non limitatifs qui représentent :

Figure 1 : un schéma global d'une architecture connue d'une machine à architecture SIMD.

Figure 2 : un schéma d'un premier mode de réalisation d'une partie d'un dispositif de traitement de données selon l'invention.

Figure 3 : un schéma d'un autre mode de réalisation d'une partie d'un dispositif de traitement de données selon l'invention.

Figure 4 : un schéma d'un processeur élémentaire selon cet autre mode de réalisation.

Figure 5 : un schéma d'un dispositif de traitement de données selon l'invention.

Figure 6 : un schéma d'interconnexion d'une mémoire RAM avec le dispositif de traitement de données.

Figure 7 : un schéma d'interconnexion d'un contrôleur externe avec le dispositif de traitement de données.

Figure 8 : un schéma d'interconnexion d'un dispositif de traitement de données avec plusieurs autres dispositifs de traitement de données à travers les interfaces d'entrée sortie I/0.

Figure 9 : un schéma d'interconnexion d'un dispositif de traitement de données avec plusieurs autres dispositifs de traitement de données à travers les interfaces de liaison L1/L2.

Figure 10 : un schéma d'interconnexion d'un dispositif de traitement de données avec une table de stockage de données LUT à travers les interfaces d'entrée sortie I/0.

Figure 11 : un schéma d'interconnexion d'un dispositif de traitement de données avec une mémoire RAM de sauvegarde à travers les interfaces de liaison L1/L2.

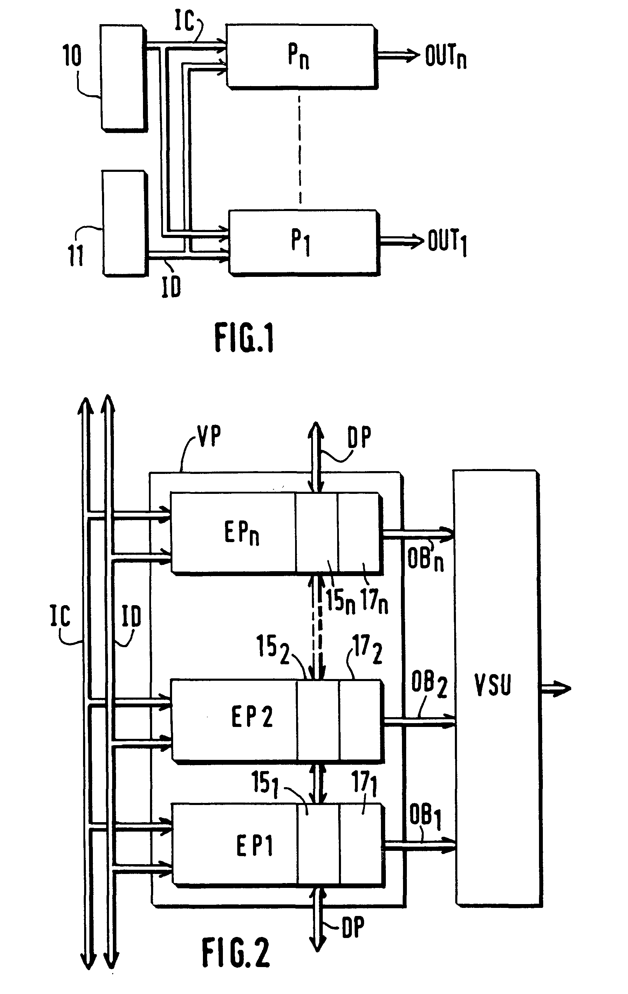

La figure 1 représente une architecture simplifiée connue d'une machine à architecture SIMD. Pour cela, une pluralité de processeurs élémentaires P1... Pn, munis chacun d'une mémoire locale, reçoivent tous en parallèle, à un instant donné, une même instruction en provenance d'une unité de contrôle 10. Cette instruction commune est distribuée à tous les processeurs par un bus de contrôle commun IC. Tous les processeurs effectuent ainsi en même temps une même tâche. Mais cette même tâche peut être effectuée sur des données qui sont généralement différentes. Les données que reçoivent les processeurs élémentaires P1... Pn sont issues d'un bloc 11 de ressources communes. Ces données sont distribuées séquentiellement ou non par un bus de données ID. Ainsi tous les processeurs peuvent effectuer en même temps une opération d'addition d'une donnée placée sur le bus ID avec chacun des résultats stockés dans chaque processeur. Il peut également s'agir d'une série de données placées sur le bus ID avec chacune un numéro d'ordre qui est reconnu individuellement par chaque processeur. Ainsi chaque processeur élémentaire prend la donnée qui le concerne dans ladite suite de données et effectue l'opération commune programmée.

La pluralité de processeurs élémentaires délivre ainsi chacun un résultat individuel sur leurs sorties OUT1... OUTn. A titre d'exemple, un tel mécanisme est par exemple mis en oeuvre en traitement d'image dans lequel chaque processeur élémentaire est affecté au traitement individuel d'un pixel de l'image. Les sorties OUT1 - OUTn délivrent ainsi une série de résultats indépendants les uns des autres.

La figure 2 représente l'architecture d'une partie d'un dispositif de traitement de données selon l'invention, ladite architecture mettant en relief des interactions entre les flux de données mis en oeuvre dans et/ou par des processeurs élémentaires qui opèrent en mode SIMD. La pluralité de processeurs élémentaires EP1 - EPn reçoit en entrée des instructions d'un bus de contrôle IC et des données d'un bus de données ID. Chaque processeur élémentaire délivre un résultat sur un bus de sortie individuel OB1 - OBn à travers des moyens de sortie 17₁ - 17ₙ. Pour que chaque processeur élémentaire puisse communiquer avec ses plus proches voisins, chaque processeur élémentaire est muni de moyens de communication 15₁ - 15ₙ qui permettent de transférer des données sur un chemin chaîné DP. Il est ainsi possible de transférer de proche en proche des données aux autres processeurs élémentaires. Ces échanges de données peuvent concerner n'importe quelles données contenues dans le processeur élémentaire. Ainsi les flux de données qui existent dans chaque processeur élémentaire ne sont plus indépendants. Ceci est particulièrement utile lorsque la contribution fournie par un processeur élémentaire est associée aux contributions fournies par les autres processeurs. C'est par exemple le cas lorsque la pluralité de processeurs élémentaires EP1 - EPn constitue un processeur vectoriel VP qui délivre une pluralité de résultats formant un résultat vectoriel. Ce dernier est alors traité globalement par une unité vecteur-scalaire VSU qui transforme le résultat de type vectoriel en un résultat de type scalaire.

Une situation de ce type est par exemple rencontrée lorsque ledit dispositif est un dispositif de traitement neuronal. Il est alors possible que les processeurs se communiquent par exemple des états de neurones Vᵢ, des coefficients synaptiques Cᵢⱼ ou des contributions Cᵢⱼ.Vⱼ. Une situation particulièrement intéressante concerne la transposition d'une matrice de coefficients synaptiques Cᵢⱼ en une matrice transposée Cⱼᵢ. Dans ce cas l'invention met à profit un rangement particulier des coefficients synaptiques dans les mémoires locales des processeurs élémentaires afin de pouvoir déduire aisément la matrice transposée Cⱼᵢ de la matrice directe Cᵢⱼ. Ce rangement consiste à ranger les données non plus sous forme de lignes (ou de colonnes) d'une mémoire adressée par un adressage lignes/colonnes, mais à ranger les coefficients synaptiques selon une diagonale de la mémoire. Ainsi, par exemple, l'adressage colonne continue à adresser des colonnes de la mémoire mais l'adressage ligne adresse alors des diagonales (ou plus exactement des parallèles aux diagonales) de la mémoire. Un autre choix permet d'inverser les deux types d'adressage.

Pour récupérer les coefficients synaptiques dans un ordre correct, lors d'un rangement en diagonale des coefficients synaptiques, il est nécessaire d'effectuer une permutation de tous les coefficients synaptiques. En permettant aux processeurs élémentaires de se communiquer des données entre voisins, le dispositif de traitement de données selon l'invention permet de mettre en oeuvre ce type de traitement et de l'effectuer rapidement. Un tel rangement de type diagonal est par exemple décrit dans le document EP 0.369.551.

L'unité VSU peut ainsi déterminer une quantité scalaire égale à la somme des contributions Cᵢⱼ.Vᵢ délivrées par chaque processeur ou à la somme des contributions Cⱼᵢ.Vⱼ dans le cas des matrices transposées. Ceci est utilisé en mode dit d'apprentissage d'un réseau de neurones lors de la mise en oeuvre de l'algorithme de rétropropagation des erreurs.

Mais les moyens de communication 15 ne sont pas limités aux permutations des coefficients synaptiques et peuvent être utilisés pour d'autres données dans le cas des réseaux de neurones ou dans le cas où la combinaison de processeurs élémentaires forment une autre machine qui nécessite de faire interagir entre eux des flux de données issus de processeurs élémentaires. Il peut s'agir par exemple d'un dispositif de traitement qui opère un traitement de filtrage numérique. Une suite d'échantillons x₁ - xₙ est distribuée dans les n processeurs élémentaires par un chargement série à travers le chemin chaîné DP. Les coefficients de pondération du filtre sont stockés dans la mémoire locale de chaque processeur. Les contributions élémentaires déterminées dans chaque processeur élémentaire sont combinées dans l'unité VSU.

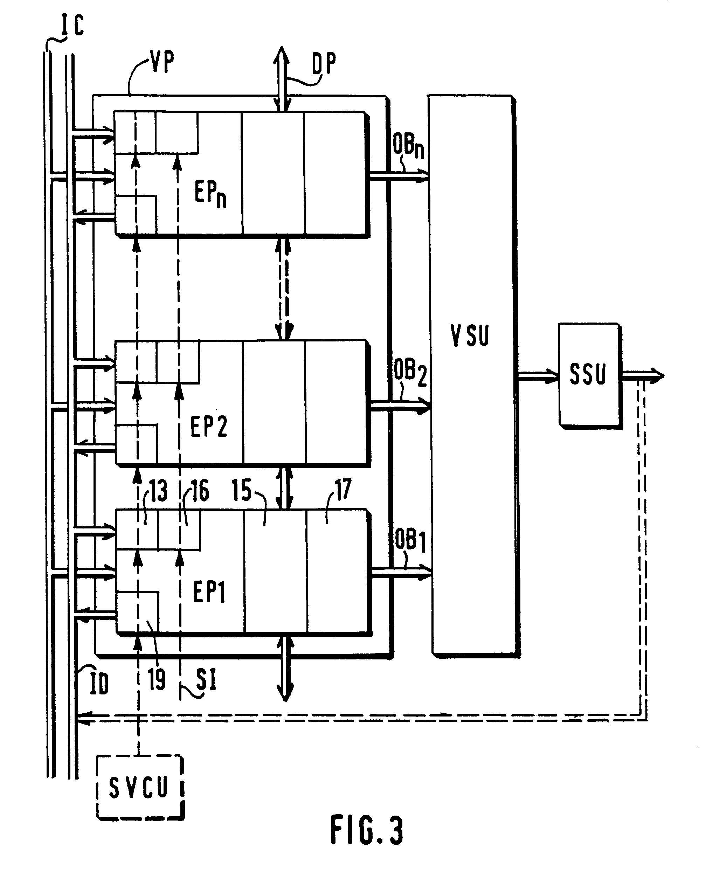

La figure 3 représente un mode de réalisation particulier de l'invention. En effet, il peut en outre être souhaitable pour certaines applications que chaque processeur élémentaire puisse communiquer avec d'autres processeurs élémentaires à travers le bus de donnée ID commun. C'est par exemple le cas lorsqu'un processeur élémentaire a besoin de communiquer une donnée à tous ou certains autres processeurs élémentaires. Un processeur peut calculer un maximum (minimum) local qui est transmis aux autres processeurs pour déterminer un maximum (ou un minimum) global. Pour cela chaque processeur élémentaire comprend des moyens de sortie 19 qui mettent sur le bus d'entrée ID au moins une donnée scalaire. Cette mise de la donnée sur le bus est commandée par une unité de contrôle SVCU qui active un seul processeur à la fois. Cette commande peut agir individuellement sur chaque processeur élémentaire grâce à un identificateur stocké dans un circuit d'identification 16 disposé dans chaque processeur élémentaire qui reçoit un signal d'identification SI. De la même façon, chaque processeur élémentaire contient des moyens d'entrée 13 qui permettent soit sélectivement soit collectivement d'entrer dans les processeurs élémentaires la ou les données placée(s) sur le bus d'entrée ID. Les moyens d'entrée 13 sont alors également contrôlés par l'unité de contrôle SVCU et le signal d'identification SI. Ainsi on peut distribuer sur tous les processeurs élémentaires une même donnée scalaire : cette opération s'apparente à une transformation scalaire-vecteur. L'unité SVCU agit alors comme une unité de transformation scalaire-vecteur.

La donnée ainsi mise sur le bus ID peut non seulement être issue des moyens de sortie 19 mais aussi provenir d'une autre source. En particulier, il est possible que le résultat scalaire délivré par l'unité VSU soit traité par une unité SSU qui transforme le résultat scalaire en un autre résultat scalaire. Ce dernier peut alors être rebouclé sur le bus ID pour être redistribué sélectivement ou collectivement sur les processeurs élémentaires. Ce processus de fonctionnement en boucle est mis en oeuvre dans certaines phases de traitement d'un réseau de neurone. Ainsi par exemple si l'unité VSU délivre le résultat scalaire Σ Cᵢⱼ.Vᵢ, ce résultat scalaire peut être soumis à l'action d'une fonction non linéaire dans l'unité SSU pour obtenir le résultat scalaire Vⱼ = f (Σ Cᵢⱼ.Vᵢ) qui est ensuite redistribué collectivement sur tous les processeurs élémentaires.

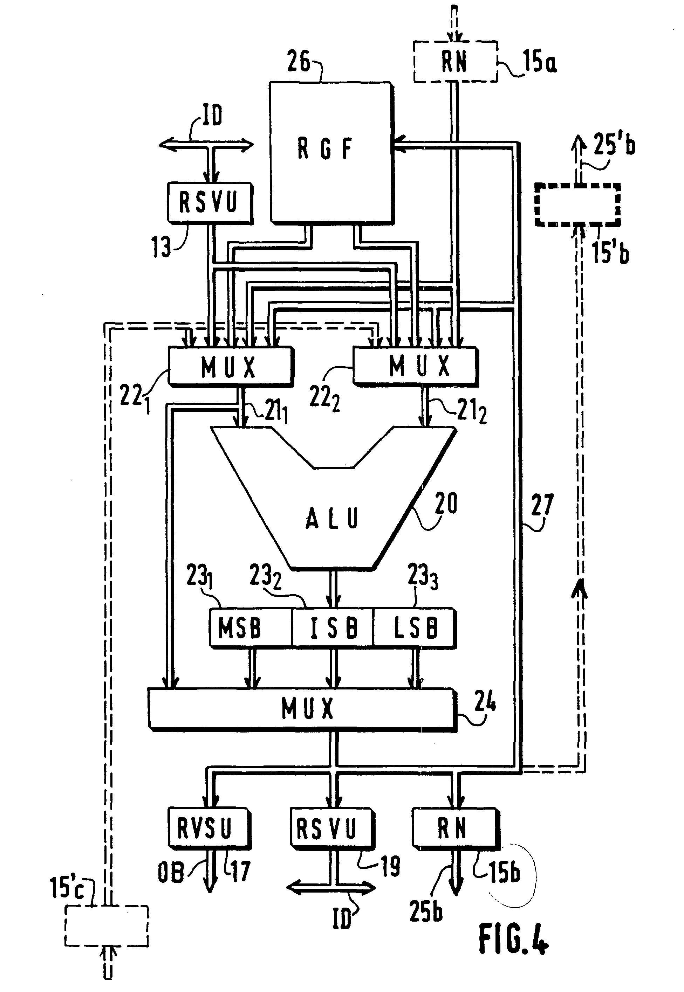

La figure 4 représente un schéma d'un processeur élémentaire muni des moyens de communication 13, 15, 17 et 19. Dans une version simplifiée, les moyens 13 et 19 peuvent ne pas exister. Le processeur comprend une unité arithmétique et logique ALU 20 munie de deux entrées 21₁, 21₂ qui reçoivent des données respectivement de deux multiplexeurs 22₁, 22₂. La sortie de l'ALU délivre des données réparties sur trois champs :
- un champ MSB formé des bits les plus significatifs,
- un champ LSB formé des bits les moins significatifs,
- un champ ISB formé des bits intermédiaires entre les deux champs précédents.

Les champs MSB, ISB, LSB sont chargés respectivement dans des registres 23₁, 23₂, 23₃. Ces registres sont connectés à un multiplexeur 24 qui sélectionne un champ parmi les champs MSB, ISB, LSB. La sélection peut également être étendue à quatre champs en ajoutant le champ de données présenté en entrée, sur l'entrée 21₁ ou 21₂. Ceci permet à ces dernières données de passer de l'entrée à la sortie du processeur sans être traitées par l'ALU. Le champ sélectionné par le multiplexeur 24 peut être chargé :
- soit dans un registre 17 RVSU dont les données sont transmises à l'unité VSU,
- soit dans un registre 19 RSVU dont les données sont transmises au bus d'entrée ID sous le contrôle de l'unité de contrôle SVCU,
- soit dans un registre 15b RN dont les données peuvent être communiquées à un processeur élémentaire adjacent.

Pour repérer l'appartenance des registres 15 dans cette partie de la description, on affecte l'indice b au processeur élémentaire représenté sur la figure 4 et on affecte les indices a et c aux registres 15 appartenant aux processeurs élémentaires adjacents placés respectivement en amont et en aval.

Si l'on désire que le processeur élémentaire communique avec l'un ou l'autre de ses processeurs adjacents (communication bidirectionnelle), le registre 15b est doublé par un registre 15'b. La sortie 25'b du registre 15'b est alors connectée au registre 15'a du processeur élémentaire précédent si la sortie 25b du registre 15b est connectée au processeur élémentaire suivant. La sortie du registre 15'c du processeur suivant est alors connectée à l'entrée des multiplexeurs 22₁ et 22₂. Le registre 15'b est représenté en traits interrompus gras pour indiquer qu'il est facultatif, et les registres 15a et 15'c sont représentés par des traits interrompus fins pour indiquer qu'ils appartiennent aux processeurs élémentaires adjacents.

Les multiplexeurs d'entrée 22₁, 22₂ peuvent recevoir des données de différentes sources. Ils sont connectés :
- aux moyens 13 comprenant un registre RSVU qui reçoit des données du bus d'entrée ID,
- à une mémoire 26 organisée en pile de registres,
- à un registre 15a, inclus dans le processeur élémentaire précédent, qui est analogue au registre 15b,
- à la sortie du multiplexeur 24.
- à la sortie du registre 15'c si ce dernier existe.

Afin d'avoir une vitesse de lecture de mémoire la plus rapide possible, la mémoire 26 est préférentiellement une mémoire à double accès en lecture. Il est ainsi possible de lire dans la mémoire deux types de données destinées à être disponibles en même temps, respectivement sur les deux entrées de l'ALU. Un type de données peut par exemple être constitué par des états de neurones et l'autre type de données peut alors être constitué par des coefficients synaptiques.

Comme il est possible que pour la mise en oeuvre de certains algorithmes, un même état de neurone soit à associer à plusieurs coefficients synaptiques ou inversement, dans ce but on peut stocker dans la mémoire 26 majoritairement des coefficients synaptiques ou majoritairement des états de neurones ou les stocker en quantité égale.

Selon les phases d'apprentissage ou de résolution mises en oeuvre dans un traitement neuronal, le dispositif de traitement de données dans son ensemble et chaque processeur élémentaire en particulier a à mettre à jour des coefficients synaptiques et des états de neurones. Ces données mises à jour, issues du multiplexeur 24, sont donc réinscrites (connexion 27) dans la mémoire 26 au cours du déroulement des traitements.

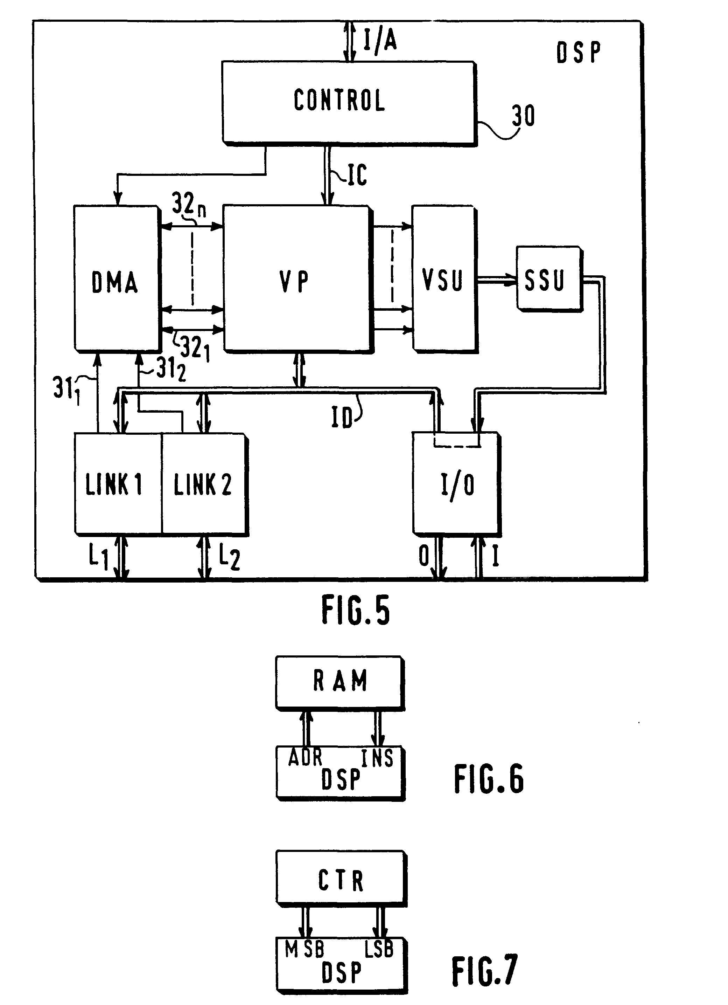

Une architecture simplifiée d'un dispositif de traitement de données (DSP) est représentée sur la figure 5. Il comprend le processeur vectoriel VP composés des éléments EPₙ, l'unité VSU et l'unité SSU déjà décrits. Pour communiquer avec l'extérieur, le dispositif DSP comprend :
- un interface entrée/sortie I/O,
- un interface de liaison LINK1/LINK2,
- un bus I/A qui reçoit ou délivre des instructions et/ou des adresses.

L'interface I/O peut :
- émettre des données vers l'extérieur sur le bus 0,
- recevoir des données de l'extérieur sur le bus I,
- transférer des données de l'unité SSU vers le processeur vectoriel VP.

L'interface de liaison comprend préférentiellement deux blocs analogues LINK1 et LINK2 qui peuvent communiquer (L1 et L2) en mode bidirectionnel avec le monde extérieur.

Ces deux blocs LINK1 et LINK2 communiquent (connexions 31₁, 31₂) avec un bloc interne DMA d'accès direct à la mémoire. Le bloc DMA est contrôlé par une unité de contrôle 30. Le bloc DMA comprend un compteur qui génère des adresses 32₁ - 32ₙ pour chaque mémoire locale RGF de chaque processeur élémentaire pour extraire ou placer sur le bus ID des données transitant de l'intérieur vers l'extérieur du dispositif DSP ou inversement.

Le bloc de contrôle 30 fournit les signaux de commande aux différentes unités à partir des instructions ou des adresses reçues sur le bus I/A.

Le dispositif de traitement de données DSP peut être utilisé de plusieurs façons sans changer ni sa conception ni son architecture.

La figure 6 indique un mode autonome de fonctionnement. Le dispositif DSP est connecté à une mémoire RAM externe. Ils communiquent par le bus I/A, le dispositif DSP recevant des instructions INS en provenance de la RAM sur une partie du bus I/A, par exemple 16 bits, et envoyant des adresses ADR vers la mémoire RAM pour obtenir des instructions suivantes sur l'autre partie du bus I/A, par exemple 16 bits.

La figure 7 représente un mode de fonctionnement où le dispositif DSP est connecté à un contrôleur externe CTR. Le bus I/A est alors utilisé en totalité (32 bits) pour fournir au dispositif DSP des instructions, le bus I/A étant partagé en bits de poids forts MSB et de poids faibles LSB.

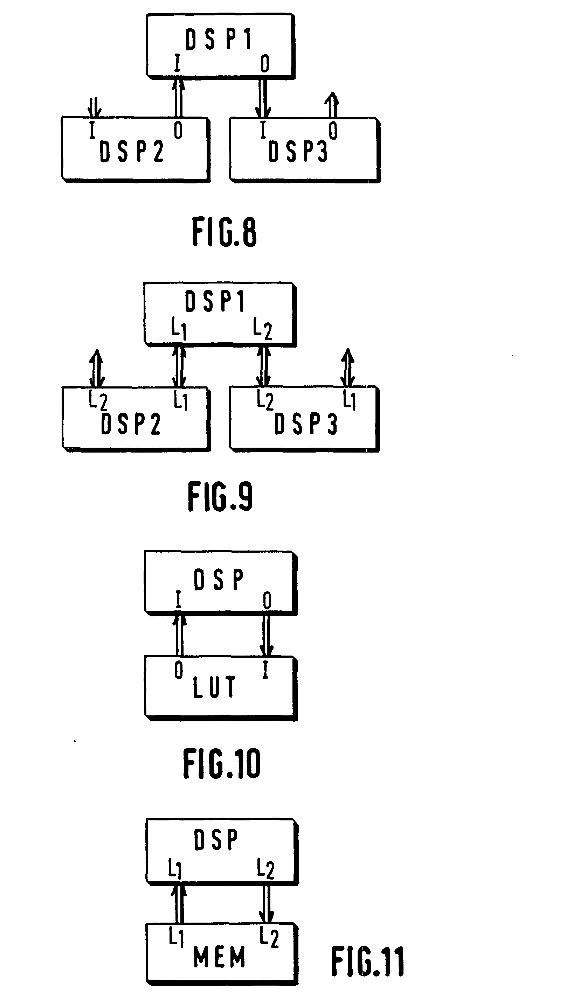

Il est également possible d'interconnecter plusieurs dispositifs DSP entre eux à travers les interfaces I/O (figure 8). Ainsi un dispositif DSP1 peut d'une part recevoir sur son bus I (16 bits) des données en provenance du bus O (16 bits) d'un dispositif DSP2, et il peut d'autre part délivrer sur son bus O (16 bits) des données au bus I (16 bits) d'un dispositif DSP3.

L'interconnexion peut aussi se faire par les interfaces de liaison LINK1/LINK2 (figure 9). Ainsi un dispositif DSP1 peut d'une part échanger bidirectionnellement des données avec un dispositif DSP2 par leur bus L1 et d'autre part échanger bidirectionnellement des données avec un dispositif DSP3 par leur bus L2.

Un dispositif DSP peut également être connecté (figure 10) à un processeur scalaire externe ou à une table de stockage de données LUT, le bus I de l'un étant connecté au bus O de l'autre.

Egalement un dispositif DSP peut être connecté à une mémoire de sauvegarde MEM (figure 11). Les bus L1 connectés entre eux assurant un sens de communication et les bus L2 connectés entre eux assurant l'autre sens de communication.

Toutes ces configurations montrent l'étendue des capacités des fonctionnements qui peuvent être obtenus avec le dispositif de traitement de données de l'invention.

## Revendications

1. Dispositif de traitement de données comprenant :
- un bus de données d'entrée (ID) pour transférer des données multiples ;
- un bus de contrôle (IC) commun pour transférer une instruction commune ;
- une pluralité de processeurs élémentaires (EP) opérant en parallèle pour traiter les données multiples selon l'instruction commune afin d'obtenir un vecteur de données ;
- une pluralité de bus de sortie (OB) pour transférer le vecteur de données ;
- des moyens (VSU) reliés à la pluralité de bus de sortie (OB) pour traiter collectivement le vecteur de données issues (OB1-OBn) desdits processeurs élémentaires ;
**caractérisé en ce que** le dispositif de traitement comprend en outre :
- un chemin chaîné de données (DP) reliant un processeur élémentaire avec au moins un de ses plus proches voisins, et
- des moyens de communication (15₁-15ₙ) pour transférer des données contenues dans un processeur quelconque à au moins un processeur élémentaire adjacent à travers le chemin chaîné de données.

2. Dispositif selon la revendication 1 **caractérisé en ce que** chaque processeur élémentaire comprend des moyens d'entrée (13) et/ou des moyens de sortie (19), un organe d'identification (16) qui active lesdits moyens (13) (19) lorsqu'un signal d'identification (SI) est reçu par ledit processeur, ledit dispositif comprenant en outre une unité de commande scalaire-vecteur (SVCU) qui, en réponse audit signal d'identification, autorise ledit processeur élémentaire soit à recevoir soit à délivrer une donnée scalaire.

3. Dispositif selon la revendication 2 **caractérisé en ce que** plusieurs processeurs élémentaires peuvent être autorisés à recevoir au moins une donnée scalaire commune.

4. Dispositif selon la revendication 3, les moyens VSU délivrant un résultat scalaire, **caractérisé en ce que** ladite donnée scalaire commune d'entrée est issue d'une unité de transformation scalaire-scalaire (SSU) qui reçoit ledit résultat scalaire en provenance de l'unité de transformation vecteur-scalaire (VSU).

5. Dispositif selon une des revendications 1 à 4 **caractérisé en ce que** chaque processeur élémentaire comprend une mémoire locale à lecture à double accès.

6. Dispositif selon la revendication 5 **caractérisé en ce que** la mémoire locale est organisée en pile de registres et est munie de moyens pour y stocker des coefficients synaptiques et des états de neurones, en stockant soit majoritairement des coefficients synaptiques, soit majoritairement des états de neurones.

## Patentansprüche

1. Datenverarbeitungsvorrichtung, versehen mit:
- einem eingehenden Datenbus (ID) für den Transfer der Mehrfachdaten;
- einem gemeinsamen Steuerbus (IC) für den Transfer eines Einzelbefehls;
- einer Vielzahl parallel arbeitender elementarer Prozessoren (EP) zur Verarbeitung der Mehrfachdaten nach einem Einzelbefehl für den Erhalt eines Datenvektors;
- einer Vielzahl an Ausgangsbussen (OB) für den Transfer des Datenvektors;
- mit der Vielzahl an Ausgangsbussen (OB) verbundene Mittel (VSU) zur kollektiven Verarbeitung des Datenvektors, kommend (OB1-OBn) aus den besagten elementaren Prozessoren;
**dadurch gekennzeichnet, daß** die Verarbeitungsvorrichtung zudem versehen ist mit:
- einem verketteten Datenweg (DP) zum Verbinden des elementaren Prozessors mit mindestens einem seiner nächsten Nachbarn, und
- Kommunikationsmitteln (15₁-15ₙ) für den Transfer der in einem beliebigen Prozessor enthaltenen Daten in mindestens einen angrenzenden elementaren Prozessor über den verketteten Datenweg.

2. Vorrichtung nach Anspruch 1, **dadurch gekennzeichnet, daß** jeder elementare Prozessor versehen ist mit Eingangsmitteln (13) und/oder Ausgangsmitteln (14), einem Identifizierungsorgan (16), das die besagten Mittel (13) (19) aktiviert, wenn von dem besagten Prozessor ein Identifizierungssignal (SI) erhalten wird, wobei die besagte Vorrichtung zudem mit einer Skalar-Vektor-Steuerungseinheit (SVCU) versehen ist, die, als Reaktion auf das besagte Identifizierungssignal, den besagten elementaren Prozessor entweder zum Empfangen oder zum Ausgeben eines Skalardatensatzes autorisiert.

3. Vorrichtung nach Anspruch 2, **dadurch gekennzeichnet, daß** mehrere elementare Prozessoren autorisiert werden können, mindestens einen gemeinsamen Skalardatensatz zu erhalten.

4. Vorrichtung nach Anspruch 3, wobei die Mittel VSU ein skalares Resultat liefern, **dadurch gekennzeichnet, daß** der besagte gemeinsame skalare Eingangsdatensatz aus einer Skalar-Skalar-Transformationseinheit (SSU) kommt, die das besagte skalare Ergebnis aus der Vektor-Skalar-Transformationseinheit (VSU) erhält.

5. Vorrichtung nach Anspruch 1 bis 4, **dadurch gekennzeichnet, daß** jeder elementare Prozessor einen lokalen Speicher mit doppeltem Lesezugang enthält.

6. Vorrichtung nach Anspruch 5, **dadurch gekennzeichnet, daß** der lokale Speicher in Registerstapel organisiert und mit Mitteln versehen ist, um dort die synaptischen Koeffizienten und Neuronenzustände abspeichern, entweder unter mehrheitlicher Speicherung von synaptischen Koeffizienten oder mehrheitlicher Speicherung von Neuronenzuständen.

## Claims

1. A data processing device, comprising:
- an input data bus (ID) for the transfer of multiple data;
- a common control bus (IC) for the transfer of a common instruction;
- a plurality of elementary processors (EP) which operate in parallel in order to process the multiple data in conformity with the common instruction in order to obtain a data vector;
- a plurality of output buses (OB) for the transfer of the data vector;
- means (VSU) that are connected to the plurality of output buses (OB) for the collective processing of the data vector supplied (OB1-Obn) by said elementary processors;
**characterized in that** the processing device also comprises:
- a concatenated data path (DP) which connects an elementary processor to at least one of its nearest neighbours, and
- communication means (15₁-15) for the transfer of the data contained in an arbitrary processor to at least one adjacent elementary processor via the concatenated data path.

2. A device as claimed in Claim 1, **characterized in that** each elementary processor comprises input means (13) and/or output means (19) and an identification member (16) which activates said means (13) (19) when an identification signal (SI) is received by said processor, said device also comprising a scalar-vector control unit (SVCU) which, in response to said identification signal, authorizes said elementary processor either to receive or to supply a scalar data.

3. A device as claimed in Claim 2, **characterized in that** several elementary processors may be authorized so as to receive at least one common scalar data.

4. A device as claimed in Claim 3, in which the means VSU supply a scalar result, **characterized in that** said common scalar input data is supplied by a scalar-scalar transformation unit (SSU) which receives said scalar result from the vector-scalar transformation unit (VSU).

5. A device as claimed in any one of the Claims 1 to 4, **characterized in that** each elementary processor comprises a local memory with a dual-access read mode.

6. A device as claimed in Claim 5, **characterized in that** the local memory is organized as a stack of registers and comprises means for storing synaptic coefficients and neuron states, and stores either mainly synaptic coefficients or mainly neuron states.
